# EUROPÄISCHE PATENTSCHRIFT

(11) **EP 2 352 707 B1**
(45) Veröffentlichungstag und Bekanntmachung des Hinweises auf die Patenterteilung: **10.10.2012**
(21) Anmeldenummer: 09764804.2
(22) Anmeldetag: 03.12.2009
(51) Int. Cl.: C04B 28/02, E01C 11/22

(54) **DRÄNBETON-ZUSAMMENTSETZUNG**
PERVIOUS CONCRETE COMPOSITION
COMPOSITION DE BÉTON DE DRAINAGE

(30) Priorität: 05.12.2008 DE 102008044395
(43) Veröffentlichungstag der Anmeldung: 10.08.2011
(73) Patentinhaber: Wacker Chemie AG, 81737 München (DE)
(72) Erfinder: SORGER, Klas, 81371 München (DE); BEZLER, Jürgen, 84489 Burghausen (DE)
(74) Vertreter: Schuderer, Michael
(86) Internationale Anmeldenummer: PCT/EP2009/066283
(87) Internationale Veröffentlichungsnummer: WO 2010/063782

(56) Entgegenhaltungen:
- EP-A1- 0 710 633
- DE-A1- 19 853 450
- US-A1- 2004 229 978
- US-B1- 6 653 372

## Beschreibung

Die Erfindung betrifft eine Dränbeton-Zusammensetzung enthaltend Zement, Füllstoff und Polymerisat, Verfahren zur Herstellung der Dränbeton-Zusammensetzung, sowie die Verwendung der Dränbeton-Zusammensetzung.

Dränbeton ist ein haufwerksporiger, hohlraumreicher Beton. Das Hohlraumvolumen von Dränbeton beträgt zwischen 10 und 35 Vol.-%, bevorzugt 20 bis 25 Vol.-%. Die Haufwerksporen ergeben sich durch die Verwendung von Füllstoffen mit eng begrenzter Korngruppe, wobei üblicherweise nur eine einzige Korngruppe verwendet wird (Einkorn, wie zum Beispiel Splitt 5/8 mm) und unter nahezu vollständiger Reduktion des Anteils an Feinbestandteilen. Dränbeton besitzt gerade soviel Zementleim, dass die Einzelkörner des Zuschlags nur an den Kontaktstellen durch eine dünne Zementsteinschicht miteinander verkittet sind und nach dem Verdichten die Hohlräume zwischen den einzelnen Körnern noch nicht ausgefüllt sind. Offenporiger Beton (Dränbeton) wird insbesondere zur Geräuschminderung in Infrastrukturprojekten, zum Beispiel im Strassenbau, eingesetzt, um geräuscharme Fahrbahnen zu bauen. Daneben findet Dränbeton aufgrund seiner Offenporigkeit auch zur Entwässerung in versickerungsfähigen Verkehrsflächen, zum Beispiel Parkplätzen, Ausstellungsflächen und Radwegen Verwendung. Die Langlebigkeit dieser Fahrbahnsysteme ist aufgrund der Bildung von Rissen und Partikelausbruch begrenzt. Um diese Defizite zu beheben wird Dränbeton mit Polymerdispersionen modifiziert.

Der Polymereinsatz führt in Dränbetonschichten zu einer Verbesserung des Frost-Tau-Widerstandes, der Rissfestigkeit und weniger Partikelausbruch und erhöht somit die Stabilität der Dränbetonschicht und die Lebensdauer. Entscheidend ist dabei, dass die Flexibilität der Betonmatrix ausreichend erhöht wird und somit Rissbildung und Kornausbruch minimiert werden, aber gleichzeitig auch die mechanische Festigkeit erhalten bleibt, um die Dauerhaftigkeit des Betons ausreichend zu gewährleisten.

In der DE-OS 1953158 wird ein wasserdurchlässiger Porbeton beschrieben, der aus körnigen mineralischen Zuschlagstoffen einer einheitlichen Kornfraktion, einem Bindemittel wie Zement und einem wasserlöslichen makromolekularen Stoff und gegebenenfalls wässriger Dispersion eines thermoplastischen Kunststoffs wie Polyvinylacetat hergestellt wird. Dieses System genügt aber nicht den Anforderungen an die Dauerhaftigkeit von wasserdurchlässigen und geräuschabsorbierenden Fahrbahnoberflächen, da die wasserlöslichen makromolekularen Stoffe durch Regenwasser ausgewaschen werden können und reines Polyvinylacetat bei niedrigeren Temperaturen von < 10 °C versprödet.

In DE 102004006165 A1 wird ein mehrschichtiger offenporiger Bodenbelag beschrieben, dessen oberste offenporige Schicht mit ein- oder zweikomponentigen Polyurethan- oder Epoxid-Klebstoffen als Bindemittel eingebaut wird. Der aufwendige Einbau des gesamten Systems in mehreren Schichten, sowie die Verwendung von Polyurethan- oder Epoxid-Klebstoffen als Bindemittel, ohne günstigere mineralische Bindemittel wie Zement, machen den Bodenbelag teuer und nicht breit anwendbar. Zudem sind Polyurethan- und Epoxid-Klebstoffe ökologisch nicht unproblematisch.

Gegenstand der EP 0710633 B1 ist Dränbeton, welcher ein polymeres Bindemittel in Form eines anionischen Styrol/(Meth)-Acrylat-Copolymerisats enthält. Die verwendeten Styrol-AcrylatCopolymere sollen bevorzugt eine hohe Mindestfilmbildetemperatur (MFT) im Bereich von 35°C bis 50°C haben. Derartige Styrol-Copolymere sind harte Polymere, die die Flexibilität der offenporigen Betonschicht nicht ausreichend erhöhen und über unzureichende Rissüberbrückungseigenschaften verfügen. Da harte Styrolacrylate mit hoher MFT bei niedrigen Temperaturen < 10°C verspröden und ihre Leistungsfähigkeit beeinträchtigt wird, kommt es zur Rissbildung und Kornausbrüchen in der Einkornbetonschicht und damit zu mangelhafter Dauerhaftigkeit, insbesondere nach der Winterperiode.

In der WO 2008/052482 A1 wird eine Straßenoberfläche aus offenporigem, Polymer-modifiziertem Beton und ein Verfahren zur Herstellung derartiger Flächen beansprucht. Die Struktur besteht aus Unterschicht, Haftbrücke, Dränbeton und Oberflächenbehandlungsschicht. Zur Polymermodifizierzung der Dränbetonschicht oder der Haftbrücke werden beliebige Polymerdispersionen eingesetzt. Die Struktur hat den Nachteil, dass eine Oberflächenbehandlungsschicht zur Verbesserung der Abnutzung der Dränbetonschicht und des Rutschwiderstandes erforderlich ist. Diese Oberflächenbehandlungsschicht wird in Form eines Polymer-modifizierten Mörtels aufgetragen, der die Poren der Dränbetonschicht teilweise abdichten kann, was sich nachteilig auf die geräuschabsorbierenden Eigenschaften und die Entwässerung der offenporigen Struktur auswirkt. Zudem erfordert die Auftragung einen zusätzlichen Arbeitsschritt, was sich nachteilig auf die Wirtschaftlichkeit auswirkt.

Es bestand daher die Aufgabe, die Dränbeton-Zusammensetzung dahingehend zu verbessern, dass Rissbildung und Kornausbruch minimiert werden, ohne dass die mechanische Festigkeit darunter leidet. Darüberhinaus sollte auf das Aufbringen einer Oberflächenbehandlungsschicht verzichtet werden können. Es wurde überraschenderweise gefunden, dass die erfindungsgemäßen Vinylacetat-Ethylen-Mischpolymerisate die Biegezugfestigkeit und damit die Flexibilität des Dränbetons unter verschiedenen klimatischen Bedingungen (sowohl bei kalten als auch warmen Temperaturen) gegenüber dem Stand der Technik erhöhen.

Gegenstand der Erfindung sind Dränbeton-Zusammensetzungen enthaltend hydraulisches Bindemittel, Füllstoff und Polymerisat, dadurch gekennzeichnet, dass als Polymerisat ein Vinylacetat-Ethylen-Mischpolymerisat mit einer Glasübergangstemperatur Tg von ≤ 20°C enthalten ist.

Geeignete hydraulische Bindemittel sind ein oder mehrere aus der Gruppe enthaltend Zement, insbesondere Portlandzement, Aluminatzement, Trasszement, Hüttenzement, Magnesiazement, Phosphatzement oder Hochofenzement; sowie Mischzemente (Kompositzemente). Bevorzugt sind Portlandzement sowie Mischzemente unterschiedlicher Zementarten oder Mischzemente mit Stoffen, welche zur Verbesserung der Zemente führen, wie Puzzolane, beispielsweise Flugasche oder Silikastaub. Bevorzugter Mischzement ist Portland-Hüttenzement. Das hydraulische Bindemittel wird im Allgemeinen in einer Menge von 10 bis 50 Gew.-%, vorzugsweise 10 bis 30 Gew.-%, jeweils bezogen auf das Gesamtgewicht der Trockenmasse der Dränbeton-Zusammensetzung, eingesetzt.

Geeignete Füllstoffe sind Kies oder Split, bevorzugt mit möglichst gleichmäßiger Korngrößenverteilung. Die Korngröße beträgt im Allgemeinen 3 bis 25 mm, vorzugsweise 5 bis 11 mm. Beispiele für geeignete Füllstoffe sind Edelsplitt 5/8, Splitt 5/8, Splitt 8/11 und Rundkorn, besonders bevorzugt Splitt 5/8 und Edelsplitt 5/8. Der Füllstoff wird im Allgemeinen in einer Menge von 50 bis 85 Gew.-%, vorzugsweise 60 bis 80 Gew.-%, jeweils bezogen auf das Gesamtgewicht der Trockenmasse der Dränbeton-Zusammensetzung, eingesetzt.

Ein geeigneter weiterer Füllstoff ist Sand. Die Korngröße beträgt im Allgemeinen 0 bis 4 mm, vorzugsweise 0 bis 2 mm. Beispiele für Sand sind Quarzsand, Quarzsandmehl, Brechsand 0/2 und Edelbrechsand 0/0,25. Der Sand wird in geringer Menge von 0,05 bis 20 Gew.-%, vorzugsweise 1 bis 10 Gew.-%, jeweils bezogen auf das Gesamtgewicht der Trockenmasse der Dränbeton-Zusammensetzung, eingesetzt. Durch Verwendung von polierresistentem Sand wird der Haftreibungskoeffizient und damit die Griffigkeit der Autoreifen auf der Fahrbahnoberfläche erhöht.

Die anwendungstechnischen Eigenschaften der Dränbeton-Zusammensetzungen können durch Zugabe von Zusatzmitteln verbessert werden. Beispiele hierfür sind Fasern, Verdicker, Pigmente, Schaumstabilisatoren, Entschäumer, Abbindebeschleuniger, Hydrophobierungsmittel, Weichmacher, Fließmittel, Luftporenmittel zur Steuerung der Betonrohdichte oder Pumpenhilfsmittel zur Verbesserung der Pumpbarkeit. Die Einsatzmengen dieser Zusatzstoffe sind dem Fachmann bekannt.

Geeignete Polymerisate sind Vinylacetat-Ethylen-Mischpolymerisate mit einer Glasübergangstemperatur Tg von ≤ 20°C. Vorzugsweise beträgt der Ethylen-Gehalt 1 bis 25 Gew.-%. Bevorzugt werden Schutzkolloid-stabilisierte Vinylacetat-Ethylen-Mischpolymerisate der genannten Spezifikation. Die Glasübergangstemperatur Tg beträgt vorzugsweise -15°C bis +20°C, bevorzugt -10°C bis +15°C, besonders bevorzugt -10°C bis +8 °C, am meisten bevorzugt -10°C bis 0°C. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Vinylacetat-Ethylen-Mischpolymerisate können weitere Comonomere enthalten. Geeignete weitere Comonomeren sind solche aus der Gruppe der Vinylester von Carbonsäuren mit 3 bis 12 C-Atomen, Ester der Acrylsäure oder Methacrylsäure, der Vinylhalogenide wie Vinylchlorid, der Olefine wie Propylen. Geeignete Vinylester sind Vinylpropionat, Vinylbutyrat, Vinyl-2-ethyl-hexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder Ve0Va10^{R} (Handelsnamen der Firma Resolution). Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Diese Comonomere werden gegebenenfalls in einer Menge von 1 bis 30 Gew.-%, bezogen auf das Gesamtgewicht des Mischpolymerisats, copolymerisiert.

Gegebenenfalls können noch 0,05 bis 10 Gew.-%, bezogen auf das Gesamtgewicht des Mischpolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw, deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri-(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Besonders bevorzugt werden Copolymerisate mit 75 bis 90 Gew.-% Vinylacetat und 10 bis 25 Gew.-% Ethylen; sowie
Mischpolymerisate von 30 bis 90 Gew.-% Vinylacetat mit 1 bis 25 Gew.-% Ethylen und 1 bis 50 Gew.-% von einem oder mehreren weiteren Comonomeren aus der Gruppe Vinylester mit 3 bis 12 C-Atomen im Carbonsäurerest wie Vinylpropionat, Vinyllaurat, Vinylester von alpha-verzweigten.Carbonsäuren mit 9 bis 11 C-Atomen wie VeoVa9, VeoVa10 VeoVa11; und
Mischpolymerisate von 30 bis 90 Gew.-% Vinylacetat, 1 bis 25 Gew.-% Ethylen und vorzugsweise 1 bis 60 Gew.-% (Meth)Acrylsäureester von unverzweigten oder verzweigten Alkoholen mit 1 bis 15 C-Atomen, insbesonders Methylmethacrylat, n-Butylacrylat oder 2-Ethylhexylacrylat; und
Mischpolymerisate von 30 bis 90 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth) Acrylsäureester von unverzweigten oder verzweigten Alkoholen mit 1 bis 15 C-Atomen, insbesonders Methylmethacrylat, n-Butylacrylat oder 2-Ethylhexylacrylat, welche noch 1 bis 25 Gew.-% Ethylen enthalten;
wobei die Mischpolymerisate noch die genannten Hilfsmonomere in den genannten Mengen enthalten können, und sich die Angaben in Gew.-% auf jeweils 100 Gew.-% aufaddieren.

Die Herstellung der Mischpolymerisate erfolgt nach dem Emulsionspolymerisationsverfahren, wobei die Polymerisationstemperatur im allgemeinen 40°C bis 100°C, vorzugsweise 60°C bis 90°C beträgt. Die Initiierung der Polymerisation erfolgt mit den für die Emulsionspolymerisation gebräuchlichen Redox-Initiator-Kombinationen. Zur Steuerung des Molekulargewichts können während der Polymerisation regelnde Substanzen eingesetzt werden. Die Polymerisation erfolgt vorzugsweise in Gegenwart von Schutzkolloiden.

Geeignete Schutzkolloide sind teilverseifte oder vollverseifte Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere; kationische Schutzkolloide, beispielsweise Polymere mit Monomereinheiten mit quarternären Ammoniumgruppen. Bevorzugt sind teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Die Schutzkolloide werden im Allgemeinen in einer Menge von insgesamt 1 bis 20 Gew.-%, bezogen auf das Gesamtgewicht der Monomere, bei der Polymerisation zugesetzt.

Es wird vorzugsweise ohne Zusatz von Emulgatoren polymerisiert. In Ausnahmefällen kann es von Vorteil sein noch zusätzlich kleine Mengen an Emulgatoren einzusetzen, gegebenenfalls 1 bis 5 Gew.-% bezogen auf die Monomermenge. Die damit erhaltenen wässrigen Dispersionen haben einen Feststoffgehalt von 30 bis 75 Gew.-%, vorzugsweise von 50 bis 60 Gew.-%.

Zur Herstellung der in Wasser redispergierbaren Polymerpulver werden die wässrigen Dispersionen, gegebenenfalls nach Zusatz von Schutzkolloiden als Trocknungshilfe, getrocknet, beispielsweise mittels Wirbelschichttrocknung, Gefriertrocknung oder Sprühtrocknung. Vorzugsweise werden die Dispersionen sprühgetrocknet. In der Regel wird die Trocknungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll 3 bis 30 Gew.-%, bezogen auf den Polymeranteil betragen; bevorzugt werden 5 bis 20 Gew.-% bezogen auf den Polymeranteil eingesetzt. Geeignete und bevorzugte bzw. Trocknungshilfen sind die als geeignet und bevorzugt genannten Schutzkolloide.

Das Vinylacetat-Ethylen-Mischpolymerisat, vorzugsweise Schutzkolloid-stabilisierte Vinylacetat-Ethylen-Mischpolymerisat, wird in einer Menge von 1 bis 20 Gew.-%, vorzugsweise 5 bis 15 Gew.-% in der Dränbeton-Zusammensetzung eingesetzt, wobei sich die Angaben in Gew.-% auf den Anteil an hydraulischem Bindemittel in der Dränbeton-Zusammensetzung beziehen, und sich die Angaben in Gew.-% jeweils auf 100 Gew.-% aufaddieren. Die Vinylacetat-Ethylen-Mischpolymerisate können in Form deren wässrigen Dispersionen oder in Form deren in Wasser redispergierbaren Polymerpulver eingesetzt werden. Bei Einsatz der Mischpolymerisate in Form von wässrigen Dispersionen bemisst sich deren Anteil am Trockengewicht des Mischpolymerisats.

Zur Herstellung der Dränbeton-Zusammensetzung werden die Bestandteile der Zusammensetzung zusammen mit Wasser abgemischt. Die Wassermenge bezogen auf hydraulisches Bindemittel wird dabei so bemessen, dass der Wasser-Zement-Faktor der Zusammensetzung bei 0,1 bis 0,6, vorzugsweise 0,2 bis 0,4 liegt.

Die Dränbeton-Zusammensetzung kann mit den üblichen Maschinen verarbeitet werden. Im Strassenbau beispielsweise mit den im Asphaltbau üblichen Strassenfertigern. Zur Verbesserung der Haftung der Dränbetonschicht mit dem Untergrund kann vor der Aufbringung der Dränbetonschicht eine Haftbrücke aufgebracht werden. Die Rezeptur für solche Haftbrücken ist dem Fachmann bekannt.

Neben der Verwendung der Dränbeton-Zusammensetzung im Strassenbau, beispielsweise zur Herstellung von Fahrbahndecken oder versickerungsfähigen Flächen kann diese noch im Wasserbau eingesetzt werden. Weitere Verwendungen sind die zur Herstellung von Beton-Filterformkörpern wie Beton-Filterrohren, -Filtersteinen und -Filterplatten, sowie zur Herstellung von Lärmschutzwänden.

Grundsätzlich sind an die Polymere im Dränbeton hohe Anforderungen bezüglich Leistungsfähigkeit gestellt, da aufgrund der Offenporigkeit des Systems auch innere Bereiche stark bewittert werden (Umspülung großer Oberflächenbereiche der gesamtem Betonmatrix). Durch Einsatz der genannten erfindungsgemäßen Vinylacetat-Ethylen-Mischpolymerisate wird die Flexibilität der Einkornbetonschicht erhöht. Im Gegensatz zu den bisher eingesetzten Styrolacrylat-Mischpolymerisaten bleibt überraschenderweise bei tiefen Außentemperaturen (Herbst-, Winter, Frühlingstag) von etwa < 5°C die Flexibilität der geräuschabsorbierenden Monokornschicht erhalten (vgl. Lagerung 1 und 4). Die Vinylacetat-Ethylen-Mischpolymerisate zeigen unter diesen Bedingungen Biegezugfestigkeiten, die mit denjenigen bei höheren Temperaturen (warmer Sommertag, direkte Sonneneinstrahlung) vergleichbar sind. Styrolacrylat-Mischpolymerisate und Vinylacetat-Ethylen-Mischpolymerisate mit höherer Tg verspröden dagegen bei Temperaturen < 5°C, und die dadurch bedingte geringere Flexibilität (Biegezugfestigkeit) der Einkornbetonschicht führt gerade an kalten Tagen zu verstärkter Rissbildung und Kornausbruch, was sich in mangelhafter Dauerhaftigkeit gerade nach der Winterperiode äußert.

Die nachfolgenden Beispiele dienen zur weiteren Erläuterung der Erfindung:
Zur Herstellung des Dränbetons wurde folgende Rezeptur eingesetzt:
   17,4 Gewichtsteile Portland-Zement (CEM I 42,5 N)
   82,4 Gewichtsteile Edelsplitt 5/8 mm
   0,05 Gewichtsteile Entschäumer (Agitan P 801)
   0,21 Gewichtsteile Betonverflüssiger (Melment F 10) w/z = 0.28

6 kg dieser Trockenmischung wurden in einem Zwangsmischer einige Sekunden vorgemischt. Anschließend wurden 0,188 kg Wasser zugegeben und 0,209 kg Polymerdispersion (der Wasseranteil der Dispersion wurde auf w/z angerechnet). Alle Komponenten wurden 3 Minuten gemischt. Es folgte eine Ruhezeit von 3 Minuten, bevor noch einmal für 1 Minute aufgemischt wurde.

Es wurden folgende Polymerdispersionen, jeweils mit einem Festgehalt von 50 %, getestet:

### Beispiel 1:

Mit Polyvinylalkohol stabilisierte wässrige Dispersion eines Vinylacetat-Ethylen-Copolymerisats (Ethylengehalt: 14 Gew.-%) mit einer Glasübergangstemperatur von +5°C.

### Beispiel 2:

Mit Polyvinylalkohol stabilisierte wässrige Dispersion eines Vinylacetat-Ethylen-Copolymerisats (Ethylengehalt: 21 Gew.-%) mit einer Glasübergangstemperatur von -7°C.

### Beispiel 3:

Mit Polyvinylalkohol stabilisierte wässrige Dispersion eines Vinylacetat-Ethylen-VeoVa10-Methylmethacrylat-Mischpolymerisats (Ethylengehalt: 8 Gew.-%) mit einer Glasübergangstemperatur von +13°C.

### Beispiel 4:

Mit Polyvinylalkohol stabilisierte wässrige Dispersion eines Vinylacetat-Ethylen-VeoVa10-Methylmethacrylat-Mischpolymerisats (Ethylengehalt: 12 Gew.-%) mit einer Glasübergangstemperatur von +6°C.

### Vergleichsbeispiel 1:

Anionisch stabilisierte wässrige Dispersion eines Styrol-Butylacrylat-Mischpolymerisats mit einer Glasübergangstemperatur von +21°C.

### Herstellung der Probekörper:

Pro Lagerung wurden 3 Probekörper (Abmessungen: 40 mm Höhe, 40 mm Breite, 160 mm Länge) hergestellt. Dazu wurde die Betonmischung in Stahlschalungen eingebracht und auf den angestrebten Hohlraumgehalt von etwa 24 % mittels Auflast verdichtet. Die Schalungen wurden mit Folie abgedeckt für 24 h bis zum Ausschalen im Klimaraum (23°C/50 % relative Feuchte) gelagert.

Zur Bestimmung des rechnerischen Hohlraumgehaltes wurde unmittelbar vor Messung der Biegezugfestigkeit die Masse der Prismen ermittelt. Für die Hohlraumgehalte der hergestellten Probekörper im Alter von 28 Tagen bei Lagerung im Klimaraum (23°C/50 % relative Feuchte) wurden folgende Werte ermittelt:
Beispiel 1: 23,8 %
Beispiel 2: 24,0 %
Beispiel 3: 24,1 %
Beispiel 4: 23,7 %
Vergleichsbeispiel 1: 24,0 %

Die Biegezugfestigkeit wurde in einem Dreipunkt-Biegezugversuch (Belastung durch eine Einzellast in der Mitte der Probekörper) in Anlehnung an DIN 1048-5 bzw. gemäß DIN 12808-3 nach folgenden Lagerbedingungen bestimmt:
Lagerung L1:
   Lagerung Normklima, 28 d NK (23°C/50% r. F.)
   Messung Biegezugfestigkeit bei 23°C.
Lagerung L2:
   Wärmelagerung, 14 d NK, 14 d 70°C
   Messung Biegezugfestigkeit bei 23°C.
Lagerung L3:
   Frost-Tau-Lagerung, Wasser und 25 Zyklen Frost-Tau-Lagerung 7 d NK, 21 d Wasser (20°C), -20°C. für 4 h, +20°C in Wasser für 2 h, 3 d NK.
   Messung Biegezugfestigkeit bei 23°C.
Lagerung L4:
   Lagerung Normklima, 28 d NK (23°C/50% r. F.), 2 d 0°C
   Messung Biegezugfestigkeit bei 0°C.

Die Ergebnisse sind in Tabelle 1 zusammengefasst:

**Tabelle 1:**

| **Beispiele** | **L1 BZF [N/mm²]** | **L2 BZF [N/mm²]** | **L3 BZF [N/mm²]** | **L4 BZF [N/mm²]** |
|---|---|---|---|---|
| | | | | |
| **Bsp. 1** | 6,39 | 6,10 | 5,30 | 6,62 |
| **Bsp. 2** | 5,59 | 5,41 | 5,81 | 6,21 |
| **Bsp. 3** | 6,58 | 4,99 | 4,98 | 7,01 |
| **Bsp. 4** | 6,10 | 5,38 | 5,68 | 6,63 |
| **Vbsp. 1** | 5,50 | 4,99 | 5,71 | 5,46 |

## Patentansprüche

1. Dränbeton-Zusammensetzungen **mit einem Hohlraumvolumen zwischen 10 und 35 Vol.-%**, enthaltend hydraulisches Bindemittel, Füllstoff und Polymerisat, **dadurch gekennzeichnet, dass** als Polymerisat ein Vinylacetat-Ethylen-Mischpolymerisat mit einer Glasübergangstemperatur Tg von ≤ 20°C. enthalten ist.

2. Dränbeton-Zusammensetzung nach Anspruch 1, **dadurch gekennzeichnet, dass** ein Schutzkolloid-stabilisiertes Vinylacetat-Ethylen-Mischpolymerisat enthalten ist.

3. Dränbeton-Zusammensetzung nach Anspruch 1 oder 2, **dadurch gekennzeichnet, dass** die Glasübergangstemperatur Tg -10°C bis +15°C beträgt.

4. Dränbeton-Zusammensetzung nach Anspruch 1 oder 2, **dadurch gekennzeichnet, dass** die Glasübergangstemperatur Tg -10°C bis +8°C beträgt.

5. Dränbeton-Zusammensetzung nach Anspruch 1 oder 2, **dadurch gekennzeichnet, dass** die Glasübergangstemperatur Tg -10°C bis 0°C beträgt.

6. Dränbeton-Zusammensetzung nach Anspruch 1 bis 5, **dadurch gekennzeichnet, dass** als Schutzkolloid teilverseifte Polyvinylalkohole mit einem Hydrolysegrad von 80 bis 95 Mol-% und einer Höpplerviskosität, in 4 %-iger wässriger Lösung, von 1 bis 30 mPas enthalten sind.

7. Dränbeton-Zusammensetzung nach Anspruch 1 bis 6, **dadurch gekennzeichnet, dass** Copolymerisate mit 75 bis 90 Gew.-% Vinylacetat und 10 bis 25 Gew.-% Ethylen enthalten sind.

8. Dränbeton-Zusammensetzung nach Anspruch 1 bis 6, **dadurch gekennzeichnet, dass** Mischpolymerisate von 30 bis 90 Gew.-% Vinylacetat mit 1 bis 25 Gew.-% Ethylen und 1 bis 50 Gew.-% von einem oder mehreren weiteren Comonomeren aus der Gruppe der Vinylester mit 3 bis 12 C-Atomen im Carbonsäurerest enthalten sind.

9. Dränbeton-Zusammensetzung nach Anspruch 1 bis 6, **dadurch gekennzeichnet, dass** Mischpolymerisate von 30 bis 90 Gew.-% Vinylacetat, 1 bis 25 Gew.-% Ethylen und 1 bis 60 Gew.-% (Meth)Acrylsäureester von unverzweigten oder verzweigten Alkoholen mit 1 bis 15 C-Atomen enthalten sind.

10. Dränbeton-Zusammensetzung nach Anspruch 1 bis 6, **dadurch gekennzeichnet, dass** Mischpolymerisate von 30 bis 90 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 25 Gew.-% Ethylen enthalten, enthalten sind.

11. Verwendung der Dränbeton-Zusammensetzung nach Anspruch 1 bis 10 im Strassenbau oder Wasserbau.

12. Verwendung der Dränbeton-Zusammensetzung nach Anspruch 1 bis 10 zur Herstellung von Betonfilterformkörpern oder Lärmschutzwänden.

## Claims

1. Pervious concrete compositions with a cavity volume between 10 and 35 vol.%, containing hydraulic binder, filler and polymer, **characterized in that** a vinyl acetate-ethylene copolymer with a glass transition temperature Tg of ≤ 20°C is contained as the polymer.

2. Pervious concrete composition according to Claim 1, **characterized in that** a protective colloid-stabilized vinyl acetate-ethylene copolymer is contained.

3. Pervious concrete composition according to Claim 1 or 2, **characterized in that** the glass transition temperature Tg is -10°C to +15°C.

4. Pervious concrete composition according to Claim 1 or 2, **characterized in that** the glass transition temperature Tg is -10°C to +8°C.

5. Pervious concrete composition according to Claim 1 or 2, **characterized in that** the glass transition temperature Tg is -10°C to 0°C.

6. Pervious concrete composition according to Claim 1 to 5, **characterized in that** as the protective colloid partly saponified polyvinyl alcohols with a hydrolysis level from 80 to 95 mol.% and a Höppler viscosity, in 4% aqueous solution, of 1 to 30 mPas are contained.

7. Pervious concrete composition according to Claim 1 to 6, **characterized in that** copolymers with 75 to 90 wt.% of vinyl acetate and 10 to 25 wt.% of ethylene are contained.

8. Pervious concrete composition according to Claim 1 to 6, **characterized in that** copolymers of 30 to 90 wt.% of vinyl acetate with 1 to 25 wt.% of ethylene and 1 to 50 wt.% of one or more further comonomers from the group of the vinyl esters with 3 to 12 C atoms in the carboxylic acid residue are contained.

9. Pervious concrete composition according to Claim 1 to 6, **characterized in that** copolymers of 30 to 90 wt.% of vinyl acetate, 1 to 25 wt.% of ethylene and 1 to 60 wt.% of (meth)acrylic acid esters of unbranched or branched alcohols with 1 to 15 C atoms are contained.

10. Pervious concrete composition according to Claim 1 to 6, **characterized in that** copolymers of 30 to 90 wt.% of vinyl acetate, 1 to 30 wt.% of vinyl laurate or vinyl esters of an alpha-branched carboxylic acid with 9 to 11 C atoms, and 1 to 30 wt.% of (meth)acrylic acid esters of unbranched or branched alcohols with 1 to 15 C atoms, which also contain 1 to 25 wt.% of ethylene, are contained.

11. Use of the pervious concrete composition according to Claim 1 to 10 in road construction or hydraulic engineering.

12. Use of the pervious concrete composition according to Claim 1 to 10 for the production of concrete filter mouldings or noise protection walls.

## Revendications

1. Compositions de béton de drainage **ayant un volume de vide compris entre 10 et 35 % en volume**, contenant un liant hydraulique, une charge et un polymérisat, **caractérisées en ce que** comme polymérisat est contenu un copolymérisat acétate de vinyle/éthylène ayant une température de transition vitreuse Tg de ≤ 20 °C.

2. Composition de béton de drainage selon la revendication 1, **caractérisée en ce qu'**un copolymérisat acétate de vinyle/éthylène stabilisé avec un colloïde protecteur est contenu.

3. Composition de béton de drainage selon la revendication 1 ou 2, **caractérisée en ce que** la température de transition vitreuse Tg est de -10 °C à +15 °C.

4. Composition de béton de drainage selon la revendication 1 ou 2, **caractérisée en ce que** la température de transition vitreuse Tg est de -10 °C à +8 °C.

5. Composition de béton de drainage selon la revendication 1 ou 2, **caractérisée en ce que** la température de transition vitreuse Tg est de -10 °C à 0 °C.

6. Composition de béton de drainage selon l'une quelconque des revendications 1 à 5, **caractérisée en ce que** comme colloïde protecteur sont contenus des poly(alcool vinylique)s partiellement saponifiés ayant un degré d'hydrolyse de 80 à 95 % en moles et une viscosité Hôppler, en solution aqueuse à 4 %, de 1 à 30 mPa.s.

7. Composition de béton de drainage selon l'une quelconque des revendications 1 à 6, **caractérisée en ce que** des copolymérisats comportant 75 à 90 % en poids d'acétate de vinyle et 10 à 25 % en poids d'éthylène sont contenus.

8. Composition de béton de drainage selon l'une quelconque des revendications 1 à 6, **caractérisée en ce que** sont contenus des copolymérisats de 30 à 90 % en poids d'acétate de vinyle avec 1 à 25 % en poids d'éthylène et 1 à 50 % en poids d'un ou plusieurs autres comonomères choisis dans le groupe des esters vinyliques ayant de 3 à 12 atomes de carbone dans le fragment acide carboxylique.

9. Composition de béton de drainage selon l'une quelconque des revendications 1 à 6, **caractérisée en ce que** sont contenus des copolymérisats de 30 à 90 % en poids d'acétate de vinyle, 1 à 25 % en poids d'éthylène et 1 à 60 % en poids d'esters d'acide (méth)acrylique d'alcools ramifiés ou non ramifiés ayant de 1 à 15 atomes de carbone.

10. Composition de béton de drainage selon l'une quelconque des revendications 1 à 6, **caractérisée en ce que** sont contenus des copolymérisats de 30 à 90 % en poids d'acétate de vinyle, 1 à 30 % en poids de laurate de vinyle ou d'ester vinylique d'un acide carboxylique alpha-ramifié ayant de 9 à 11 atomes de carbone, ainsi que 1 à 30 % en poids d'esters d'acide (méth)acrylique d'alcools ramifiés ou non ramifiés ayant de 1 à 15 atomes de carbone, qui contiennent encore 1 à 25 % en poids d'éthylène.

11. Utilisation de la composition de béton de drainage selon l'une quelconque des revendications 1 à 10 dans la construction de routes ou des travaux hydrauliques.

12. Utilisation de la composition de béton de drainage selon l'une quelconque des revendications 1 à 10 pour la production de corps moulés filtrants en béton ou de murs antibruit.
